# EUROPÄISCHE PATENTANMELDUNG

(11) **EP 0 937 680 A1**
(43) Veröffentlichungstag der Anmeldung: **25.08.1999**
(21) Anmeldenummer: 99102513.1
(22) Anmeldetag: 10.02.1999
(51) Int. Cl.: C01B 17/88

(54) **Vorrichtung zum Konzentrieren und Reinigen von Schwefelsäure**

(30) Priorität: 23.02.1998 DE 19807632
(71) Anmelder: Bayer Aktiengesellschaft, 51368 Leverkusen (DE)
(72) Erfinder: Lailach, Günter Dr., 47799 Krefeld (DE); Renner, Michael Dr., 77520 Baytown, Texas (US); Savakis, Stylianos Dr., 51069 Köln (DE)

(57) **Zusammenfassung**

Es wird eine Vorrichtung und Verfahren zum Konzentrieren von Schwefelsäure auf 95 bis 98 % H₂SO₄-Gehalt und gegebenenfalls zum Reinigen der Schwefelsäure bei einer Temperatur von 270 bis 340°C beschrieben. Die Vorrichtung besteht wenigstens aus einem Natur-Umlaufverdampfersystem (4, 5; 6; 7; 1; 13) gebildet aus einem zweiteiligen Brüdendom (4, 5), einem Wärmetauscher (1), insbesondere einem Rohrbündelwärmetauscher, einer Kreislaufleitung (6, 7) und einer Destillationskolonne (13), wobei die die flüssige, 270 bis 340°C heiße Schwefelsäure führenden Apparateteile Brüdendomunterteil (4), Wärmetauscher (1) und Kreislaufleitung (6, 7) aus einer siliciumhaltigen austenitisch-ferritischen Eisenlegierung bestimmter Zusammensetzung bestehen.

## Beschreibung

Die Erfindung betrifft eine Vorrichtung zum Konzentrieren und Reinigen von Schwefelsäure, die es erlaubt, Schwefelsäure bei 270-340°C auf 95-98 % H₂SO₄-Gehalt zu konzentrieren. Die Schwefelsäure führenden Teile der Vorrichtung bestehen aus austenitischen oder austenitisch-ferritischen Stählen.

Es ist bekannt, Abfallschwefelsäure bei geringem Unterdruck und Temperaturen im Bereich 300 bis 320°C bis auf ca. 96 % zu konzentrieren (Winnacker, Küchler, Chemische Technologie, Bd. 2, 4. Aufl. 1982, S. 67 bis 70).

Beim sogenannten Pauling-Verfahren wird in indirekt mit Rauchgasen beheizten Kesseln aus Gußeisen mit aufgesetzter Destillationskolonne Abfallschwefelsäure von 70 bis 85 % auf 95 bis 96 % H₂SO₄ eingedampft. Dabei wird ein ständiger erheblicher Korrosionsabtrag bei der Kesselherstellung durch große Wanddicken berücksichtigt. Das Verhältnis von Wärmeübertragungsfläche zu Kesselvolumen ist bei solchen Vorrichtungen sehr ungünstig. Demzufolge stellen derartige Anlagen ein erhebliches Sicherheitsrisiko dar, weil bei einem Versagen des Kessels ca. 10 m³ siedende 96 %ige Schwefelsäure in den etwa 750 °C heißen Feuerungsraum fließen können. Im Drum-Konzentrator wird die Schwefelsäure durch direkten Kontakt mit heißen Rauchgasen konzentriert. Die Abgase sind durch SO₂, Schwefelsäurenebel, Stickoxide und gegebenenfalls organische Verbindungen belastet, was wegen des großen spezifischen Abgasvolumens einen erheblichen Reinigungsaufwand verursacht.

Die Hochkonzentrierung in einem Fallfilmverdampfer aus Quarzglas (EP-A 22 473) konnte nur in kleinen Einheiten realisiert werden. Das gleiche gilt für die in DE-A 2 909 029 beschriebene Hochkonzentrierung mittels in die Schwefelsäure eingetauchter Infrarotstrahler aus Quarzglas.

Vakuumeindampfer mit Wärmetauschern aus Tantal (s. z.B. EP-A 156 199) sind auf einen Temperaturbereich unter 200°C beschränkt. Dabei läßt sich Schwefelsäure nur bei extremem Unterdruck auf 95 - 96 % eindampfen, wodurch spezifisch große Apparaturen (bezogen auf die Verdampfungsleistung) und hohe Aufwendungen für die Vakuumerzeugung und Brüdenkondensation erforderlich werden. Außerdem sind die Bedingungen für die oxidative Zerstörung von organischen Verunreinigungen wegen der niedrigen Säuretemperatur sehr ungünstig.

Aufgabe war es daher, eine Vorrichtung zu entwickeln, die es erlaubt, mit geringem Schwefelsäureinhalt eine hohe Wasserverdampfungsleistung bei Temperaturen im Bereich oberhalb von 250°C zu realisieren und gegebenenfalls eine oxidative Reinigung zu ermöglichen.

Die Aufgabe wird erfindungsgemäß gelöst durch eine Vorrichtung zum Konzentrieren von Schwefelsäure auf 95 bis 98 % H₂SO₄-Gehalt und gegebenenfalls zum Reinigen der Schwefelsäure bei einer Temperatur von 270 bis 340°C, bestehend wenigstens aus einem Natur-Umlaufverdampfersystem gebildet aus einem zweiteiligen Brüdendom einem Wärmetauscher, insbesondere einem Rohrbündelwärmetauscher, Kreislaufleitung und Destillationskolonne, dadurch gekennzeichnet, daß die die flüssige, 270 bis 340°C heiße Schwefelsäure führenden Apparateteile Brüdendomunterteil, Wärmetauscher und Kreislaufleitung aus einer siliciumhaltigen austenitisch-ferritischen Eisenlegierung folgender Zusammensetzung bestehen
- von 13 bis 32 Gew.-%: Chrom
- von 5 bis 25 Gew.-%: Nickel
- von 4 bis 9 Gew.-%: Silicium
- max. 0,07 Gew.-%: Kohlenstoff
- max. 0,03 Gew.-%: Schwefel
- max. 0,03 Gew.-%: Phosphor
- max. 8 Gew.-%: Mangan
- max. 3 Gew.-%: Molybdän
- max. 4 Gew.-%: Kupfer
- max. 20 Gew.-%: Kobalt
- max. 4 Gew.-. %: Wolfram
- max. 2 Gew.-%: Niob und Tantal
- max. 0,2 Gew.-%: Stickstoff
und einem Rest auf 100 Gew.-% Eisen mit einem Gefüge, das einen Deltaferritanteil zwischen 10 und 65 % aufweist, und vorzugsweise mindestens 20 Gew.-% Fe enthält,
oder aus austenitischen Eisenlegieningen mit
- von 10 bis 12 Gew.-%: Chrom
- von 15,5 bis 17,5 Gew.-%: Nickel
- von 5,7 bis 6,5 Gew.-%: Silicium
- max. 0,06 Gew.-%: Kohlenstoff
- max. 0,03 Gew.-%: Phosphor
- max. 0,03 Gew.-%: Schwefel
- max. 1,5 Gew.-%: Mangan
- max. 0,15 Gew.-%: Titan
- max. 0,8 Gew.-%: Zirkonium
- max. 0,2 Gew.-%: Stickstoff
- max. 0,3 Gew.-%: Molybdän
- max. 0,01 Gew.-%: Bor
- max. 0,25 Gew.-%: seltene Erdmetalle
- max. 1 Gew.-%: Magnesium. Aluminium und Kalzium
- und einem Rest auf 100 Gew.-%: Eisen
oder
- von 8 bis 16 Gew.-%: Chrom
- von 20 bis 30 Gew.-%: Nickel
- von >6,5 bis 7,4 Gew.-%: Silicium
- max. 0.03 Gew.-%: Kohlenstoff
- max. 0,03 Gew.-%: Phosphor
- max. 0,01 Gew.-%: Schwefel
- max. 1 Gew.-%: Magnesium, Aluminium und Kalzium
- und einem Rest auf 100 Gew.-%: Eisen
und bei dem das Oberteil des Brüdendomes und die Destillationskolonne aus emailliertem Stahl bestehen.

Vorzugsweise ist das Unterteil des Brüdendomes mit einem Austragsrohr aus siliciumhaltiger Eisenlegierung versehen, das in ein Tauchgefäß aus siliciumhaltiger Eisenlegierung oder emailliertem Stahl mit einem Auslaß mündet.

In einer bevorzugten Variante weist die Kreislaufleitung einen zusätzlichen Entleerungsstutzen und/oder einen Stutzen zur Einleitung von Gasen, z.B. Luft oder Inertgas, zwecks Erhöhung der Säurekreislaufgeschwindigkeit und/oder von Oxidationsmittel, z.B. Schwefelsäure, Wasserstoffperoxid, Ozon, Nitrosylschwefelsäure, auf.

Der Wärmetauscher der Vorrichtung ist insbesondere ein Rohrbündelwärmetauscher, durch dessen Rohre die im Kreislauf befindliche Schwefelsäure fließt, und der eine Rauchgasbeheizung oder eine elektrische Beheizung aufweist.

Die Rohre des Wärmetauschers sind bevorzugt als Bimetallrohre ausgeführt, wobei die Innerrohre aus der gleichen siliciumhaltigen Eisenlegierung wie das Brüdendomunterteil und die Außenrohre aus hitzebeständigem Stahl bestehen.

Brüdendomunterteil und Brüdendomoberteil sind in einer weiteren bevorzugten Variante durch ein Flanschpaar verbunden, wobei der Flansch des Unterteils aus der gleichen siliciumhaltigen Eisenlegierung wie das Brüdendomunterteil besteht.

Der Flansch des Brüdendomunterteils weist in einer Vorzugsausführung der Erfindung mindestens 2 ringförmige Nuten zur Aufnahme von Dichtungen auf.

In einer besonders bevorzugten Variante der Erfindung sind die Vorrichtungsteile, die aus siliciumhaltigen Eisenlegierungen bestehen, an ihrer Oberfläche mit einer Passivierungsschicht versehen, die durch mindestens 24-stündiges Behandeln mit 95 bis 98 %iger Schwefelsäure bei 290 bis 340°C, bevorzugt durch mindestens 12-stündige Behandlung mit 95 bis 98 %iger Schwefelsäure, die mindestens 350 ppm Nitrosylschwefelsäure enthält, bei einer Temperatur von 250 bis 340°C oder mit 95 bis 100 %iger Salpetersäure bei einer Temperatur von 70 bis 90°C entsteht, wobei der Druck so hoch gewählt wird, daß die Flüssigkeit nicht siedet.

Die Packung der Destillationskolonne wird insbesondere aus Glas, Silicium-Eisen-Guß oder Keramik gefertigt.

Weiterer Gegenstand der Erfindung ist ein Verfahren zum Konzentrieren von Schwefelsäure auf eine Konzentration von 95 bis 98 % unter Verwendung der erfindungsgemäßen Vorrichtung, das dadurch gekennzeichnet ist, daß die Vorrichtung mit Schwefelsäure einer Konzentration von 70 bis 93 % beschickt und die Schwefelsäure bei einem Druck von 0,3 bis 1,2 bar (abs.), vorzugsweise von 0,8 bis 0,99 bar (abs.) und einer Temperatur von 270 bis 340°C, vorzugsweise 280 bis 320°C, destilliert wird.

Eine Reinigung der Schwefelsäure wird insbesondere dadurch erreicht, daß man in die im Umlauf strömende Schwefelsäure Oxidationsmittel wie Nitrosylschwefelsäure, Salpetersäure, Wasserstoffperoxid, Ozon oder andere einleitet. Erfolgt die Einleitung unterhalb des Wärmetauschers, wird die Umlaufgeschwindigkeit der flüssigen Säure durch die entstehenden Reaktionsgase vorteilhaft erhöht.

Ein weiterer Gegenstand der Erfindung ist die Verwendung der erfindungsgemäßen Vorrichtung zur Konzentrierung und gegebenenfalls Reinigung von Schwefelsäure.

Ein Nachteil von bekannten Schwefelsäureeindampfanlagen aus emailliertem Stahl sind die vielen Flanschverbindungen, die insbesondere bei höheren Betriebstemperaturen Probleme verursachen. Bei der erfindungsgemäßen Vorrichtung können in dem Anlagenbereich, in dem sich heiße flüssige Schwefelsäure befindet, Flanschverbindungen vollständig vermieden werden, da die erfindungsgemäß verwendeten Legierungen schweißbar sind.

Bevorzugt wird allerdings die Verwendung von Flanschverbindungen dort, wo dies aus apparatebautechnischen oder verfahrenstechnischen Gründen sinnvoll erscheint, besonders im Hinblick auf Reinigungsnotwendigkeiten.

Besonders bevorzugt werden dabei Flanschverbindungen, die als Nut- und Feder-Flansche ausgeführt sind.

Außerdem können Kompensatoren die zum Ausgleich der thermischen Ausdehnung der Anlagenteile erforderlich sind, aus der gleichen siliciumhaltigen Eisenlegierung wie das Brüdendomunterteil verwendet werden.

Vorzugsweise werden die aus siliciumhaltigen Eisenlegierungen gefertigten Apparateteile vor der bestimmungsgemäßen Inbetriebnahme zur Schwefelsäurekonzentrierung einer passivierenden Oberflächenbehandlung unterzogen. Die bevorzugte Behandlung erfolgt während mindestens 24 h mit 95 bis 98 %iger Schwefelsäure bei 250 bis 340°C, bevorzugt mindestens 12 h mit 95 bis 98 %iger Schwefelsäure, die mindestens 350 ppm Nitrosylschwefelsäure enthält, bei einer Temperatur von 250 bis 340°C oder mit 95 bis 100 %iger Salpetersäure während mindestens 12 Stunden bei einer Temperatur von 70 bis 90°C und unter einem Druck, bei dem die Flüssigkeit nicht siedet.

Die erfindungsgemäße Vorrichtung zum Konzentrieren und gegebenenfalls Reinigen von Schwefelsäure bietet im Vergleich zu Vorrichtungen nach dem Stand der Technik mehrere Vorteile:

Die verwendeten Werkstoffe und Heizmedien ermöglichen den Betrieb der Vorrichtung bei 270 bis 340°C und einem Druck von 0,3 bis 1,2 bar (abs.), vorzugsweise von 0,8 bis 0,99 bar (abs.).

Im Vergleich zu Anlagen mit Tantal-Wärmetauschern, die bei max. 200°C betrieben werden können, ermöglicht die erfindungsgemäße Vorrichtung optimale Betriebsbedingungen für die Zerstörung organischer Verunreinigungen in der Schwefelsäure bei gleichzeitig minimiertem Aufwand für die Brüdenkondensation.

Außerdem ermöglicht der vergleichsweise hohe Betriebsdruck kleine Apparateabmessungen und erniedrigt damit den Herstellungsaufwand für die Anlage.

Im Vergleich zu den bekannten Pauling-Anlagen beträgt der spezifische Säureinhalt (bezogen auf die Wasserverdampfungsleistung) nur 10 bis 20 %. Besonders vorteilhaft ist, daß im Falle einer Leckage die austretende Säure problemlos in einer Wanne aufgefangen werden kann, wogegen sie bei Leckagen an Pauling-Kesseln in den Oferraum des Kessels fließt und dann erhebliche SO₃-Emissionen verursacht.

Wegen der möglichen hohen Temperaturdifferenz zwischen Heizmedium und Schwefelsäure ist die erforderliche spezifische Wärmeaustauschfläche sehr klein im Vergleich zu Anlagen, die mit Dampf oder Wärmeträgeröl beheizt werden müssen.

Die Teile aus siliciumhaltiger Eisenlegierung sind im Betrieb vorzugsweise alle mit flüssiger Schwefelsäure bedeckt. Dadurch wird sichergestellt, daß keine korrosive Schwefelsäure geringerer Konzentration durch Kondensation an Kaltstellen zu Korrosionsschäden an der Vorrichtung führen kann.

Die Fertigung des Brüdendomoberteils aus emailiertem Stahl hat den Vorteil, daß die in diesem Teil auftretenden, verdünnte Schwefelsäure enthaltenden Kondensate erfahrungsgemäß gut verarbeitet werden können, ohne an den Wänden des Brüdendomoberteils Korrosionsschäden zu hinterlassen. In diesem Bereich der Vorrichtung treten folglich andere Korrosionsprozesse auf als in Bereich des Brüdendomunterteils bzw. im Naturumlauf.

Da alle Apparateteile, die flüssige Schwefelsäure mit einer Temperatur über 270°C enthalten, durch Schweißverbindungen oder Nut- und Feder-Flansche miteinander verbunden werden können, ergeben sich keine Abdichtprobleme bei der erfindungsgemäßen Vorrichtung.

Die Erfindung wird nachstehend anhand der Figuren beispielhaft näher erläutert ohne daß dadurch die Erfindung im einzelnen eingeschränkt ist.

In den Figuren zeigen
- Fig.1: eine schematische Darstellung einer Ausführung der erfindungsgemäßen Vorrichtung
- Fig.2: die Flanschverbindung zwischen Brüdendomunterteil (4) und Brüdendomoberteil (5) der Vorrichtung nach Fig.1 in vergrößerter Darstellung

### Beispiel

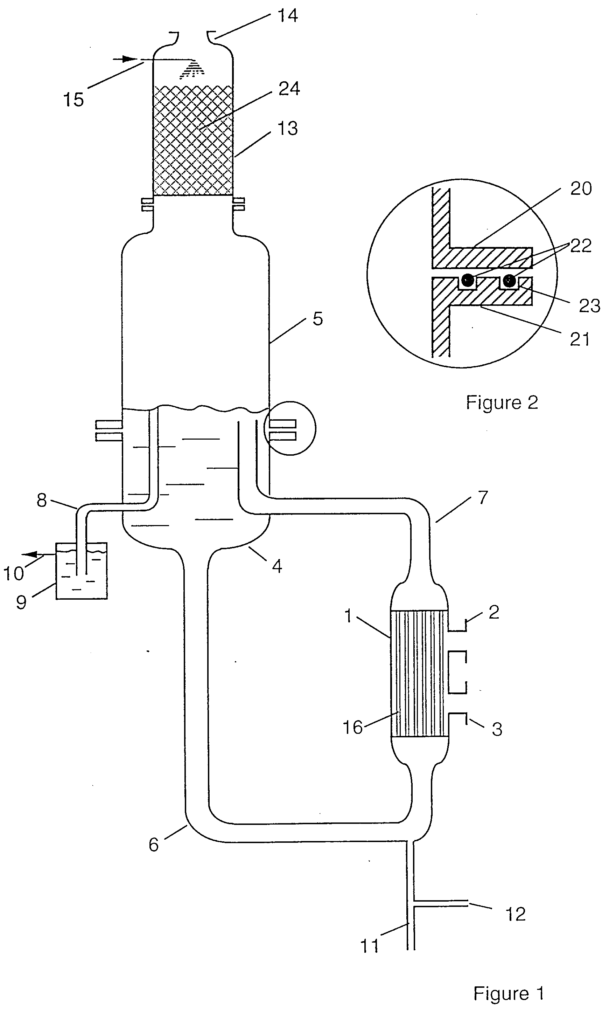

Fig. 1 zeigt den schematischen Aufbau der Konzentrierungsvorrichtung. Die Vorrichtung besteht aus einem zweiteiligen Brüdendom 4, 5, einem Rohrbündelwärmetauscher 1, einer Kreislaufleitung 6, 7 und einer Destillationskolonne 13, die zusammen ein Natur-Umlaufverdampfersystem bilden.

Die von Schwefelsäure berührten Teile des Wärmetauschers 1 bestehen aus siliciumhaltiger Eisenlegierung mit 5,94 % Si, 17,49 % Ni, 11,34 % Cr, 62,7 % Fe und sind als bimetallische Rohre 16 mit einem Innenrohr 17 aus der siliciumhaltigen Eisenlegierung und einem Außenrohr 18 aus hitzebeständigem Stahl 1.4593 ausgeführt.

Die Kreislaufleitung 6 ist mit einem Entleerungsstutzen 11 versehen und mit einem Stutzen 12 zur Einleitung von Luft oder Oxidationsmitteln (65 %ige HNO₃; Schwefelsäure, gesättigt mit Nitrosylschwefelsäure) zur Zerstörung organischer Verbindungen.

Durch die Wand des Brüdendomunterteils 4 ist ein Überlaufrohr 8 geführt, durch das die heiße konzentrierte Schwefelsäure in das Tauchgefäß 9 abgeleitet wird, aus dem sie durch den Stutzen 10 in eine Vorlage oder einen Säurekühler fließt. Alle bisher beschriebenen Apparateteile, die mit flüssiger, 270 - 340 °C heißer, 95 - 98 %iger Schwefelsäure in Berührung kommen, sind aus der obengenannten siliciumhaltigen Eisenlegierung gefertigt und durch Schweißverbindungen miteinander verbunden. Die Größe des Tauchgefäßes 9 ist dem Betriebsdruck der Vorrichtung und der zur vollständigen Oxidation organischer Verunreinigungen benötigten Verweilzeit angepasst. Für die vorgesehene Betriebstemperatur von 320°C und die Produktion von 6 t/h 96 %iger Säure beträgt das Volumen 1,5 m³, die Tauchtiefe 50 cm.

Das Brüdendomunterteil 4 ist über eine Flanschverbindung (siehe Detail nach Fig. 2) mit dem Brüdendomoberteil 5 verbunden, das aus emailliertem Stahl gefertigt ist. Auf das Oberteil 5 ist eine Kolonne 13 aufgesetzt, die aus emailliertem Stahl gefertigt ist und mit Füllkörpern aus Glas gefüllt ist. Darüber befindet sich die Zuleitung 15 für die 70 bis 93 %ige Schwefelsäure, die über ein geeignetes Verteilsystem, z. B. eine Düse 26, auf die Kolonnenfüllung 24 verteilt wird. Durch den Stutzen 14 werden die wässrigen Brüden zu einem nicht gezeichneten Kondensationssystem abgeleitet.

Der Wärmetauscher 1 ist für die Beheizung mit Rauchgas (s. Fig. 1) ausgebildet, das durch einen Gaseintrittsstutzen 2 in den Raum um die Rohre 16 eingeleitet und durch einen Gasaustrittsstutzen 3 abgeleitet wird. Das Rauchgas wird mittels eines Zwischenbodens mehrfach durch das Rohrbündel geführt werden. Der Außenmantel des Wärmetauschers 1 mit den Stutzen 2, 3 besteht aus hitzebeständigem Stahl.

In Fig. 2 ist das Flanschenpaar dargestellt, mit dem das Unterteil 4 und Oberteil 5 des Brüdendoms verbunden werden. In den Flansch des Unterteils 21, der aus der siliciumhaltigen Eisenlegierung gefertigt ist, sind Nuten 23 zur Aufnahme der Dichtungen 22 aus Glas- oder Porzellan-gefülltem PTFE eingelassen. Der Gegenflansch 20 besteht aus emailliertem Stahl. Die Breite der Flansche beträgt aus Sicherheitsgründen mindestens 100 mm, damit die äußere Dichtung nicht über ca. 150°C erwärmt wird und für eine sichere Abdichtung nach außen voll funktionsfähig bleibt. Die Flansche sind mittels Autoklavenklammern gegeneinander gepreßt und gesichert.

## Patentansprüche

1. Vorrichtung zum Konzentrieren von Schwefelsäure auf 95 bis 98 % H₂SO₄-Gehalt und gegebenenfalls zum Reinigen der Schwefelsäure bei einer Temperatur von 270 bis 340°C, bestehend wenigstens aus einem Natur-Umlaufverdampfersystem (4, 5; 1; 6; 13) gebildet aus einem zweiteiligen Brüdendom (4, 5), einem Wärmetauscher (1), insbesondere einem Rohrbündelwärmetauscher, Kreislaufleitung (6, 7) und Destillationskolonne (13), dadurch gekennzeichnet, daß die die flüssige, 270 bis 340°C heiße Schwefelsäure führenden Apparateteile Brüdendomunterteil (4), Wärmetauscher (1) und Kreislaufleitung (6, 7) aus einer siliciumhaltigen austenitisch-ferritischen Eisenlegierung folgender Zusammensetzung bestehen
von 13 bis 32 Gew.-% Chrom
von 5 bis 25 Gew.-% Nickel
von 4 bis 9 Gew.-% Silicium
max. 0,07 Gew.-% Kohlenstoff
max. 0,03 Gew.-% Schwefel
max. 0,03 Gew.-% Phosphor
max. 8 Gew.-% Mangan
max. 3 Gew.-% Molybdän
max. 4 Gew.-% Kupfer
max. 20 Gew.-% Kobalt
max. 4 Gew.-. % Wolfram
max. 2 Gew.-% Niob und Tantal
max. 0,2 Gew.-% Stickstoff
und einem Rest auf 100 Gew.-% Eisen mit einem Gefüge, das einen Deltaferritanteil zwischen 10 und 65 % aufweist,
oder aus austenitischen Eisenlegierungen mit
von 10 bis 12 Gew.-% Chrom
von 15,5 bis 17,5 Gew.-% Nickel
von 5,7 bis 6,5 Gew.-% Silicium
max. 0,06 Gew.-% Kohlenstoff
max. 0,03 Gew.-% Phosphor
max. 0,03 Gew.-% Schwefel
max. 1,5 Gew.-% Mangan
max. 0,15 Gew.-% Titan
max. 0,8 Gew.-% Zirkonium
max. 0,2 Gew.-% Stickstoff
max. 0,3 Gew.-% Molybdän
max. 0,01 Gew.-% Bor
max. 0,25 Gew.-% seltene Erdmetalle
max. 1 Gew.-% Magnesium. Aluminium und Kalzium
und einem Rest auf 100 Gew.-% Eisen
oder
von 8 bis 16 Gew.-% Chrom
von 20 bis 30 Gew.-% Nickel
von >6,5 bis 7,4 Gew.-% Silicium
max. 0.03 Gew.-% Kohlenstoff
max. 0,03 Gew.-% Phosphor
max. 0,01 Gew.-% Schwefel
max. 1 Gew.-% Magnesium, Aluminium und Kalzium
und einem Rest auf 100 Gew.-% Eisen
und bei dem das Oberteil (5) des Brüdendomes (4, 5) und die Destillationskolonne (13) aus emailliertem Stahl bestehen.

2. Vorrichtung gemäß Anspruch. 1, dadurch gekennzeichnet, daß das Unterteil (4) des Brüdendomes (4, 5) mit einem Austragsrohr (8) aus siliciumhaltiger Eisenlegierung versehen ist, das in ein Tauchgefäß (9) aus siliciumhaltiger Eisenlegierung oder emailliertem Stahl mit einem Auslaß (10) mündet.

3. Vorrichtung nach Anspruch 1 oder 2, dadurch gekennzeichnet, daß die Kreislaufleitung (6, 7) einen zusätzlichen Entleerungsstutzen (11) und/oder einen Stutzen (12) zur Einleitung von Gasen und/oder von Oxidationsmittel aufweist.

4. Vorrichtung nach einem der Ansprüche 1 bis 3, dadurch gekennzeichnet, daß der Wärmetauscher (1) ein Rohrbündelwärmetauscher ist, durch dessen Rohre (16) die im Kreislauf befindliche Schwefelsäure fließt, und den eine Rauchgasbeheizung oder eine elektrische Beheizung aufweist.

5. Vorrichtung nach Anspruch 4, dadurch gekennzeichnet, daß die Rohre (16) des Wärmetauschers (1) als Bimetallrohre ausgeführt sind, wobei die Innenrohre (17) aus einer siliciumhaltigen Eisenlegierung bestehen, die aus dem für das Brüdendomunterteil (4) geeigneten Eisenlegierungen ausgewählt ist, und die Außenrohre (18) aus hitzebeständigem Stahl bestehen.

6. Vorrichtung nach einem der Ansprüche 1 bis 5, dadurch gekennzeichnet, daß Brüdendomunterteil (4) und Brüdendomoberteil (5) durch eine Flanschverbindung (20, 21) verbunden sind, wobei der Flansch (21) des Unterteils (4) aus der gleichen siliciumhaltigen Eisenlegierung wie das Brüdendomunterteil (4) besteht.

7. Vorrichtung nach einem der Ansprüche 1 bis 6, dadurch gekennzeichnet, daß der Flansch (21) des Unterteils (4) mindestens 2 ringförmige Nuten (23) zur Aufnahme von Dichtungen (22) aufweist.

8. Vorrichtung nach einem der Ansprüche 1 bis 7, dadurch gekennzeichnet, daß die Vorrichtungsteile, die aus siliciumhaltigen Eisenlegierungen bestehen, an ihrer Oberfläche mit einer Passivierungsschicht versehen sind, die durch mindestens 24-stündige Behandlung von 95 bis 98 %iger Schwefelsäure bei 250 bis 340°C, vorzugsweise mindestens 12-stündige Behandlung mit 95 bis 98 %iger Schwefelsäure, die mindestens 350 ppm Nitrosylschwefelsäure enthält, bei einer Temperatur von 250 bis 340 °C oder mit 95 bis 100 %iger Salpetersäure bei einer Temperatur von 70 bis 90°C und bei einem solchen Druck, bei dem die Säure nicht siedet, entsteht.

9. Vorrichtung nach einem der Ansprüche 1 bis 8, dadurch gekennzeichnet, daß die Packung (24) der Destillationskolonne (13) aus Glas, Silicium-Eisen-Guß oder Keramik besteht.

10. Verfahren zum Konzentrieren von Schwefelsäure auf eine Konzentration von 95 bis 98 %, dadurch gekennzeichnet, daß eine Vorrichtung nach einem der Ansprüche 1 bis 10 mit Schwefelsäure einer Konzentration von 70 bis 93 % beschickt und die Schwefelsäure bei einem Druck von 0,3 bis 1,2 bar (abs.), vorzugsweise von 0,8 bis 0,99 bar (abs.) und einer Temperatur von 270 bis 340°C destilliert wird.

11. Verwendung der Vorrichtung nach einem der Ansprüche 1 bis 9 zur Konzentrierung und gegebenenfalls Reinigung von Schwefelsäure.
